# EUROPEAN PATENT SPECIFICATION

(11) **EP 4 331 806 B1**
(45) Date of publication and mention of the grant of the patent: **02.04.2025**
(21) Application number: 23158994.6
(22) Date of filing: 28.02.2023
(51) Int. Cl.: B32B 37/15, B29C 48/07, B29C 48/21, B29C 48/49

(54) **SHEET AND METHOD FOR MANUFACTURING SAME**
FOLIE UND VERFAHREN ZUR HERSTELLUNG DAVON
FEUILLE ET PROCÉDÉ DE FABRICATION DE CELLE-CI

(30) Priority: 02.09.2022 CN 202211073962; 02.09.2022 CN 202222338611 U
(43) Date of publication of application: 06.03.2024
(73) Proprietor: Bestway Inflatables & Material Corp., Shanghai 201812 (CN)
(72) Inventor: ZENG, Xianglin, SHANGHAI - NO. 208 JINYUANWU ROAD, 201812 (CN)
(74) Representative: Biggi, Cristina

(56) References cited:
- US-A- 4 857 393
- US-A- 5 789 065
- US-A1- 2002 187 333

## Description

### BACKGROUND

### 1. Field

Apparatuses and methods consistent with exemplary embodiments relate to a sheet, and an apparatus and method for manufacturing the sheet.

### 2. Description of the Related Art

With the development of material technology and the increase of social demands, sheets made of elastic organic materials are widely used. For example, people increasingly use various portable apparatuses in various places, for example, move the apparatuses used indoors to the outdoors for use. As a typical example, inflatable products are light weight and easy to package and store, and are widely used. A related-art inflatable product is often made of several sheets of a polymer material manufactured using high-frequency welding and splicing to construct the outer contour thereof. Therefore, the sheets are often made of an elastic polymer material, such as thermoplastic polyurethanes (TPU) or polyvinyl chloride (PVC), that can be welded at a high frequency. However, when there is a high air pressure inside a product made from such sheets, the sheets will be stretched and deform, so that the shape of the inflatable product will likewise deform.

In order to reinforce such sheet material, technicians have attempted to attach a fabric to the sheet material to improve the tensile performance of the sheet material. Taking a sheet material made of TPU as an example, in related art fabric lamination process, a fabric base is first coated with a binder to obtain a base material; the base material is rolled into a base-material roll for ease of transportation; and a TPU-material roll is prepared. Then, the base-material roll and the TPU-material roll to be laminated are transferred to a laminating machine. The binder of the base-material, supplied by the base-material roll, and the TPU material, supplied by the TPU-material roll, are heated and pressed, so as to form a sheet material in which the TPU material is bonded to the fabric base by means of the binder.

However, the above process has some disadvantages. First, after the intermediate material is obtained, the intermediate material is rolled into a heavy roll for transportation. Second, when an adhesive is used, it is necessary to dissolve the adhesive in an organic solvent to obtain an adhesive solution, to apply the adhesive solution to a surface of the fabric, to evaporate the organic solvent to retain the adhesive on the surface of the fabric, and to then roll up the fabric having the adhesive, so that a transportable base-material roll is obtained. However, the evaporated organic solvent may cause serious environmental pollution.

A method according to the background art is disclosed in US 4 857 393 A.

### SUMMARY

The present invention is directed to a method for manufacturing a sheet according to claim 1 and to a sheet according to claim 4. Preferred embodiments are defined in the dependent claims. Example embodiments may address at least the above problems and/or disadvantages and other disadvantages not described above. Also, example embodiments are not required to overcome the disadvantages described above, and may not overcome any of the problems described above.

One or more example embodiments may provide an apparatus, however not within the scope of the invention, and process for
manufacturing a sheet, which simplify a production process of the sheet, reduce the production cost, and reduce possible environmental pollution.

According to an aspect of an example embodiment, however not within the scope of the invention, an apparatus for manufacturing a
sheet comprises: a first feeding device configured to convey an elastic polymer material; a second feeding device configured to convey a binding material; a third feeding device configured to supply a fabric sheet; a raw material processing device comprising: a confluence cavity, a first flow channel configured to convey the elastic polymer material from the first feeding device to the confluence cavity, a second flow channel configured to convey the binding material from the second feeding device to the confluence cavity, and a material outlet, in communication with the confluence cavity and configured to discharge a first material sheet comprising the elastic polymer material disposed on a first side of the first material sheet and the binding material disposed on a second side of the first material sheet; and a pressing device configured to laminate the fabric sheet to the second side of the first material sheet.

The pressing device may comprise a first roller and a second roller configured to convey the first material sheet and the fabric sheet therebetween.

At least one of the first roller and the second roller may comprise a working surface made of a metallic material.

The manufacturing apparatus may further comprise: a cooling system comprising a cooling pipeline, wherein the first roller comprises a working surface made of a metallic material, and the cooling pipeline is disposed in the first roller.

The manufacturing apparatus may further comprise: a cooling system comprising a cooling pipeline, wherein the second roller comprises a working surface made of a metallic material, and the cooling pipeline is disposed in the second roller.

One of the first roller and the second roller may comprise a working surface made of an elastic material.

The binding material may comprise a reactive adhesive.

According to an aspect of another example embodiment, within the scope of the invention, a method for manufacturing a sheet comprises: receiving a supply of an elastic polymer material and a binding material and a fabric sheet; and forming a material sheet comprising: a first layer comprising the elastic polymer material, a second layer comprising the binding material, an intermediate layer, between the first layer and the second layer, the intermediate layer comprising a mixture of the elastic polymer material and the binding material, and a fabric layer comprising the fabric sheet bonded to the second layer, wherein the elastic polymer material is PVC or TPU and the binding material is a polyurethane reactive hot-melt adhesive.

The material sheet may be a second material sheet, and the method may further comprise: prior to forming the second material sheet: forming a first material sheet, the first material sheet comprising the first layer, the second layer, and the intermediate layer; wherein the forming the second material sheet comprises pressing the first material sheet and the fabric sheet such that the first material sheet is bonded to the fabric sheet by means of the second layer of the first material sheet to form the second material sheet.

The manufacturing method may further comprise: cooling the first material sheet using a pressing device.

According to an aspect of another example embodiment, within the scope of the invention, a sheet comprises: a covering
layer comprising: a first layer comprising an elastic polymer material, a second layer comprising a binding material, and an intermediate layer between the first layer and the second layer, the intermediate layer comprising a mixture of the elastic polymer material and the binding material; and a fabric layer bonded to the binding material, wherein the elastic polymer material is PVC or TPU and the binding material is a polyurethane reactive hot-melt adhesive.

The sheet may be made by pressing the covering layer and the fabric layer.

### BRIEF DESCRIPTION OF THE DRAWINGS

The above and/or other aspects will become apparent and more readily appreciated from the following description of example embodiments, taken in conjunction with the accompanying drawings, in which:
- FIG. 1 shows a structure of an apparatus for manufacturing a sheet according to an example embodiment, not within the scope of the invention;
- FIG. 2 shows a principle of laminating a fabric material onto an elastic polymer material according to the example embodiment of FIG. 1;
- FIG. 3 shows a sheet according to an example embodiment;
- FIG. 4 is a flow chart of a method of manufacturing a sheet according to an example embodiment; and
- FIG. 5 is a flow chart of a method of manufacturing a sheet according to another example embodiment.

### DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.

It will be understood that the terms "include," "including", "comprise, and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these example embodiments that are obvious to those of ordinary skill in the technical field to which these exemplary embodiments pertain may not be described here in detail.

As used herein, orientation or positional relationships indicated by terms such as "center", "longitudinal", "transverse", "length", "width", "thickness", "up", "down", "front", "rear", "left", "right", "vertical", "horizontal", "top", "bottom", "inside", "outside", "clockwise", and "anticlockwise" are based on orientation or positional relationships shown in the accompanying drawings and are merely for ease of description.

As used herein, unless otherwise explicitly specified and defined, the terms "mounting", "connecting", "connection" and "fixing" should be understood in a broad sense, for example, they can be a fixed connection, a detachable connection, or an integrated connection, and can be a direct connection and can also be an indirect connection through an intermediate.

As described herein, an "inflatable product" comprises at least one inflation chamber for inflating, and after a pressure of gas (e.g., air) in the inflation chamber reaches a desired value, the inflatable product is considered to be in an inflated state and is maintained in a certain shape. After the gas in the inflation chamber of the inflatable product is discharged, the inflatable product is considered to be in a deflated state, and a volume of the inflatable product is greatly reduced relative to that of the inflatable product in the inflated state, thereby facilitating storage of the inflatable product.

According to an aspect of an example embodiment, not within the scope of the invention, a manufacturing apparatus for manufacturing a sheet is provided. The manufacturing apparatus includes a raw material processing device and a plurality of raw material feeding devices separately connected to the raw material processing device and each supplying at least one raw material to the raw material processing device. The raw materials may include a raw material that enables a fabric to be bonded to one or more other raw materials. The raw materials may be joined in the raw material processing device and then discharged from a discharge port of the raw material processing device as a first material sheet. The first material sheet and the fabric may then be fed together into a pressing device, and thus the first material sheet and the fabric are pressed by the pressing device to form a second material sheet. The second material sheet comprises a fabric layer and a covering layer laminated to the fabric layer.

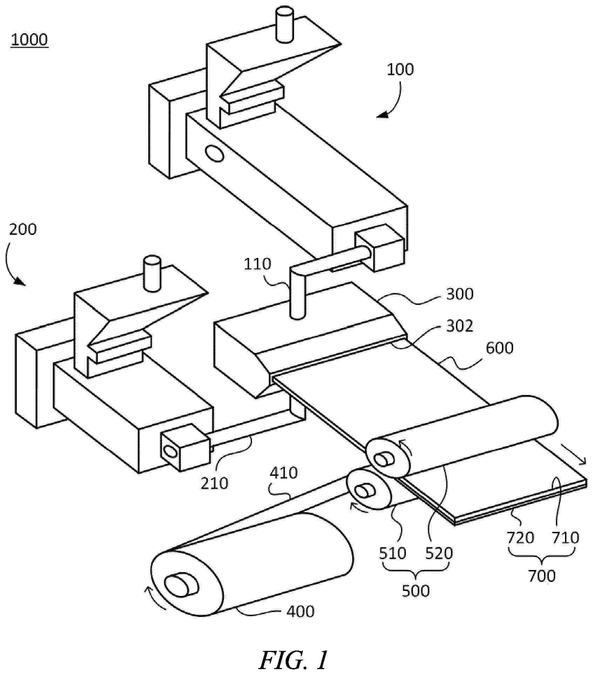

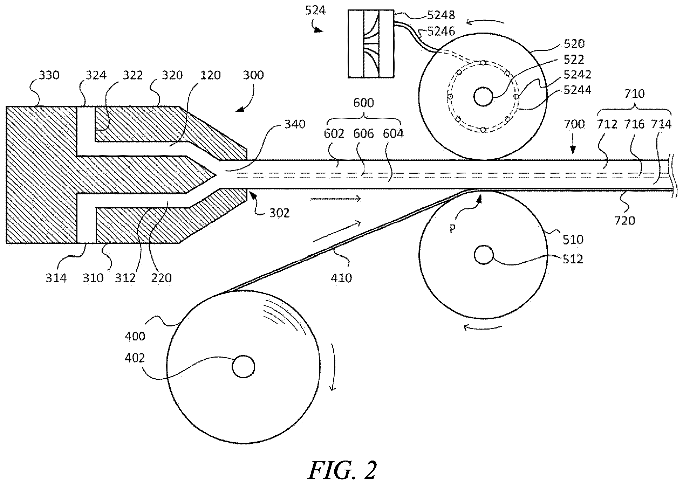

FIG. 1 shows an apparatus 1000 for manufacturing a sheet, and the sheet itself, according to an example embodiment not within the scope of the invention; The sheet may be used for make an inflatable product. FIG. 2 shows how an elastic polymer material discharged by the raw material processing device is laminated to a fabric.

It can be understood that the manufacturing apparatus 1000 shown in FIGs. 1 and 2 and the specific structure thereof are merely examples of a sheet manufacturing process. Configurations illustrated in FIGs. 1 and 2, such as the relative positional relationships and the dimensional relationships among the various components, are not intended to be limiting.

The manufacturing apparatus 1000 comprises a first feeding device 100, a second feeding device 200, a raw material processing device 300, a third feeding device 400, and a pressing device 500.

The first feeding device 100 is connected to the raw material processing device 300 via a first feeding path 110, and the elastic polymer material 120 (e.g., PVC or TPU) is heated by the first feeding device 100 to a plasticization temperature and is thus in a molten state, and the elastic polymer material 120 in the molten state is conveyed to the raw material processing device 300 via the first feeding path 110. The second feeding device 200 is connected to the raw material processing device 300 via a second feeding path 210, and a binding material 220, which may be a reactive adhesive such as polyurethane reactive (PUR) hot-melt adhesive, is heated by the second feeding device 200 to a plasticization temperature and is thus in a molten state, and the binding material 220 in the molten state is conveyed to the raw material processing device 300 via the second feeding path 210.

In particular, where a reactive adhesive is used, the reactive adhesive, including PUR, is free of water and organic solvents, has a high performance and is environmentally friendly, has the characteristics of common hot-melt adhesives, such as being solvent-free, high initial adhesion, and rapid positioning during assembly, and also has the properties of water resistance, heat resistance, cold resistance, creep resistance, media resistance, etc. that are inherent to reactive adhesives. However, such reactive adhesive cannot undergo a reverse reaction after curing, so that the laminating process of the laminating solution using the reactive adhesive should be completed before the curing of the reactive adhesive is completed.

According to an example embodiment, the first feeding device 100 and the second feeding device 200 each have a screw conveying mechanism to, under the pressure and shear force generated by rotation of a screw, enable materials to be sufficiently plasticized and uniformly mixed and allow the materials to be spirally conveyed in an axial direction of the screw. It can be understood that those skilled in the art would be able to use other forms of conveying mechanisms according to actual needs. Thus, alternately, but not by way of limitation, the first feeding device 100 and the second feeding device may each have a gear pump conveying mechanism, or the first feeding device 100 and the second feeding device 200 may have conveying mechanisms different from each other.

The first feeding device 100 and/or the second feeding device 200 may also optionally have a heating apparatus to heat the elastic polymer material 120 and/or the binding material 220.

The flowable elastic polymer material 120 and the flowable binding material 220 are then joined in the raw material processing device 300. Specifically, the elastic polymer material 120 from the first feeding device 100 flows into the raw material processing device 300 via a first inlet 324, and the binding material 220 from the second feeding device 200 flows into the raw material processing device 300 via a second inlet 314.

The material from the first feeding device 100 and the material from the second feeding device 200 are joined in a confluence cavity at the end of the raw material processing device 300. The joined materials flow from the confluence cavity to a material outlet 302 to form a first material sheet 600 and continue to be conveyed in the direction of the corresponding arrow in FIG. 2. Referring to FIGs. 1 and 2, the entirety of the confluence cavity 340, or at least a portion of the confluence cavity adjacent to the material outlet 302, and the material outlet 302, extend in a width direction of the first material sheet 600 (or, in other words, perpendicular to a direction in which the first material sheet 600 is conveyed).

Referring to FIG. 2, at least one first flow channel 322 and at least one second flow channel 312 are formed inside the raw material processing device 300. The first flow channel 322 is used for the elastic polymer material 120 to flow therethrough, and the second flow channel 312 is used for the binding material 220 to flow therethrough. In the example embodiment shown in FIG. 2, the raw material processing device 300 is assembled from at least a first component 320, a second component 310 and a third component 330. The first component 320 and the third component 330 define one or more first flow channels 322. For example, the first component 320 is adjacent to the third component 330, but at least one of the first component 320 and the third component 330 includes one or more recesses at a contact position, so as to form the aforementioned one or more first flow channels 322. For example, in an example embodiment, the first component 320 and the third component 330 define a first flow channel 322, and the first flow channel 322 is substantially flat in part or in whole and is in communication with the confluence cavity 340. In another example embodiment, the first component 320 and the third component 330 define two or more first flow channels 322, and the two or more first flow channels 322 are each connected to the confluence cavity 340. Similarly, the second component 310 and the third component 330 define one or more second flow channels 312. For example, the second component 310 is adjacent to the third component 330, but at least one of the second component 310 and the third component 330 includes one or more recesses at the contact position, so as to form the aforementioned one or more second flow channels 312. According to an example embodiment, the second component 310 and the third component 330 define a second flow channel 312, and the second flow channel 312 is substantially flat in part or in whole and is in communication with the confluence cavity 340. According to another example embodiment, the second component 310 and the third component 330 define two or more second flow channels 312, and the two or more second flow channels 312 are each connected to the confluence cavity 340.

The elastic polymer material 120 from the first flow channel 322 and the binding material 220 from the second flow channel 312 are partially mixed in the confluence cavity. As described above, the first material sheet 600 continues to be conveyed via the material outlet 302, and via the mixed part of the elastic polymer material 120 and the binding material 220, the two materials are tightly bonded together. In other words, in the first material sheet 600, the part of the elastic polymer material 120 that is not mixed with the binding material 220 forms a first layer 602 of the first material sheet, the part of the binding material 220 that is not mixed with the elastic polymer material 120 forms a second layer 604 of the first material sheet, the part where the elastic polymer material 120 and the binding material 220 are mixed forms a third layer 606 of the first material sheet, and the first layer 602 and the second layer 604 of the first material sheet are firmly bonded by means of the third layer 606. It should be understood that there are no distinct interface between the first layer 602 and the third layer 606 and between the second layer 604 and the third layer 606.

In the orientation shown in FIG. 1, the width of the material outlet 302 defines the width of the first material sheet 600, and the height of the material outlet 302 defines the thickness of the first material sheet 600. Optionally, the width of the material outlet 302 may be adjustable to facilitate adjustment of the thickness of the first material sheet 600. The width of the material outlet 302 may be adjusted, for example, by means of adjusting the relative position between the first component 320 and the third component 330 and/or adjusting the relative positional relationship between the second component 310 and the third component 330.

It can be understood that the first component 320 and the third component 330 may be provided integrally or separately, and the second component 310 and the third component 330 may be provided integrally or separately.

It can also be understood that, in other example embodiments, more flow channels may be provided. For example, a third flow channel (not shown) may be further provided in addition to the one or more first flow channels 322 and the one or more second flow channels 312. Similar to the first flow channel(s) 322 and the second flow channel(s) 312, the third flow channel may also be connected to the confluence cavity 340, and the first material sheet 600 further comprises a third layer (not shown) in addition to the first layer 602 and the second layer 604. Alternatively, the first feeding device 100 may be a multi-layer co-extrusion device. The extruded elastic polymer material 120, for example in a molten state, may have a two-layer or multi-layer composite structure, and then the elastic polymer material 120 and the binding material 220 are joined in the confluence cavity and discharged together via the material outlet 302 to form the first material sheet 600. Thus, the finally formed second material sheet may have a composite elastic polymer material coating to have more comprehensive mechanical properties.

Next, the first material sheet 600 is fed into the pressing device 500. Meanwhile, the fabric sheet 410 supplied by the third feeding device 400 is also fed into the pressing device 500, so that the fabric sheet 410 is laminated to the first material sheet 600. The second layer 604 of the first material sheet 600 faces the fabric sheet 410, so that the first material sheet 600 and the fabric sheet 410 are bonded together by means of the second layer 604. That is, the second layer 604 of the first material sheet 600 is arranged between the fabric sheet 410 and the first layer 602 of the first material sheet 600. It can be understood that, compared with the example embodiments shown in FIGs. 1 and 2, in other example embodiments where the first material sheet 600 comprises more layers, one of binding layers of the first material sheet 600 may face the fabric sheet 410, so that the first material sheet 600 is firmly bonded to the fabric sheet 410 by means of the binding layer under the action of the pressing device 500.

According to one example embodiment, the width of the fabric sheet 410 is configured to be the same or approximately the same as the width of the first material sheet 600. For example, the width of the material outlet 302 is adjusted to be the same or approximately the same as the width of the fabric sheet 410. In this way, after the fabric sheet 410 and the first material sheet 600 are pressed and bonded, the outer contours thereof substantially coincide, so that the finished sheet has neat edges without a large amount of material to be cut out.

In the example embodiments shown in FIGs. 1 and 2, the pressing device 500 comprises a first roller 520 and a second roller 510 arranged facing each other, and the first material sheet 600 and the fabric sheet 410 are disposed between the first roller 520 and the second roller 510. The gap between the first roller 520 and the second roller 510 is adjusted such that the first roller 520 and the second roller 510 are sufficiently pressed against the surfaces of the first material sheet 600 and the fabric sheet 410, respectively. At least the second layer 604 in the first material sheet 600 discharged via the material outlet 302 has not been completely cooled and still has a certain fluidity, so that after the fabric sheet 410 and the first material sheet 600 are in contact at the pressing position P, shown in FIG. 2, and pressed by the first roller 520 and the second roller 510, the fabric sheet 410 is tightly bonded to the second layer 604 of the first material sheet 600. After the first material sheet 600 and the fabric sheet 410 are completely cooled, the first material sheet 600 and the fabric sheet 410 are firmly bonded by means of the second layer 604. At least one of the first roller 520 and the second roller 510 is driving. For example, a first shaft 522 drives the first roller 520 to rotate about the first shaft 522, the first roller 520 drives the first material sheet 600 to move, the first material sheet 600 drives the fabric sheet 410 to move, and the fabric sheet further drives the second roller 510 to rotate about a second shaft 512. Alternatively, the second shaft 512 drives the second roller 510 to rotate about the second shaft 512, the second roller 510 drives the fabric sheet 410 to move, the fabric sheet 410 drives the first material sheet 600 to move, and the first material sheet 600 further drives the first roller 520 to rotate about the first shaft 522. Alternatively, the first roller 520 and the second roller 510 are driven to rotate by the first shaft 522 and the second shaft 512, respectively, and the first roller 520 and the second roller 510 drive the first material sheet 600 and the fabric sheet 400 to move.

The fabric sheet 410 is supplied by the third feeding device 400. For example, a roll formed by rolling the fabric sheet is sleeved on a shaft (see FIG. 2, a third shaft 402) of the third feeding device 400. Optionally, the third feeding device 400 is unpowered, and the fabric sheet 410 that is pressed to the first material sheet 600 and continues to be conveyed provides a pulling force to the third feeding device 400 to achieve continuous drawing of the fabric sheet 410. It can be understood that, in some example embodiments, the third feeding device 400 is configured to be driving, for example, but not by way of limitation, the third shaft 402 drives the third feeding device 400 to achieve continuous feeding, and the revolution speed of the third shaft 402 matches the travelling speeds of the fabric sheet 410 and the first material sheet 600.

At least the working surface (i.e., the surface in contact with the first material sheet) of the first roller 520 is substantially made of a metallic material, so as to provide high heat transfer efficiency and increase the cooling and curing rate after the first material sheet 600 is in contact with the fabric sheet 410.

As shown in FIG. 2, in some example embodiments, in order to further improve the cooling and curing rate of the first material sheet 600, the manufacturing apparatus 1000 further comprises a cooling system 524. The cooling system 524 specifically comprises a cooling pipeline 5242, a connecting pipeline 5244, a circulation pipeline 5246, and a heat exchange device 5248. The cooling medium is a fluid that is pressurized and then flows from the circulation pipeline 5246 into the connecting pipeline 5244 and is then distributed to the cooling pipeline 5242 distributed inside the first roller 520, so as to cool the first roller 520 to keep same at a relatively low temperature. After this, the cooling medium flows into the heat exchange device 5248 via the circulation pipeline 5246, and discharges heat to the atmosphere (or other media) by means of the heat exchange device 5248, and then flows into the connecting pipeline 5244 and the cooling pipeline 5246 via the circulation pipeline 5246. For example, the circulation pipeline 5246 comprises at least two pipes that respectively introduce the fluid into the cooling pipeline 5242 (e.g., via the connecting pipeline 5244) and into the heat exchange device 5248. The cooling medium may be a gas or a liquid in some example embodiments, for example, the cooling medium is water, or alcohol, or a solvent thereof. The cooling system 524 allows the first material sheet 600 to be cooled and cured as quickly as possible after coming into contact with the fabric sheet 410, so as to prevent quality defects of the sheet product due to partial separation of the first material sheet 600, which is still at a relatively high temperature after pressing, from the fabric.

The working surface of the second roller 510 (i.e., the surface in contact with the fabric sheet 410) is optionally made of an elastic material (e.g., rubber or silicone) to provide sufficient friction between the second roller 510 and the fabric sheet 410 to prevent unexpected relative sliding between the second roller 510 and the fabric sheet 410, thereby ensuring reliable lamination between the fabric sheet 410 and the first material sheet 600. It can be understood that, in some example embodiments, the working surface of the second roller 510 may also be made of a metallic material. In addition, the second roller 510 is also internally provided with a cooling pipeline that is connected to the cooling system mentioned above, with the implementation and technical effect of the cooling pipeline in the second roller 510 being substantially the same as the working principle and technical effect of the cooling pipeline 5246 in the first roller described above.

It can be understood that, in some example embodiments, the second roller 510 may also be configured to have a working surface, which is made of a metallic material, and a cooling pipeline, while the first roller 520 is not provided with a cooling pipeline therein, so that the fabric sheet 410 and the first material sheet 600 are cooled by means of the second roller 510. The specific implementation and the technical effect are substantially the same as those in the example embodiments described above in which the first roller is internally provided with the cooling pipeline 5246.

It can be understood that the pressing device 500 may have more rollers to provide higher pressing quality and/or better cooling effect (e.g., by providing cooling pipelines in more rollers).

The pressed first material sheet 600 and fabric sheet 410 are firmly bonded to form a second material sheet 700. The second material sheet 700 can then be used as a sheet for making an inflatable product. Optionally, the second material sheet undergoes subsequent steps, such as shaping and washing, and is then packaged into a sheet for making an inflatable product.

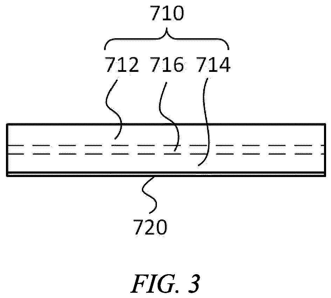

Referring to FIG. 2, the second material sheet 700 comprises a covering layer 710 and a fabric layer 720. The covering layer 710 comprises a first layer 712, a second layer 714 and an intermediate layer 716. The first layer 712 comprises the aforementioned elastic polymer material 120, and the second layer 714 comprises the aforementioned binding material 220. The intermediate layer 716 comprises a mixture of the aforementioned elastic polymer material and the aforementioned binding material, so that the first layer 712 and the second layer 714 are firmly bonded. Also, the second layer 714 is firmly bonded to the fabric layer 720. In this way, the covering layer 710 and the fabric layer 720 are firmly bonded to form the sheet shown in FIG. 3.

In the example embodiments described above, the fabric sheet is made of a fabric material which may be, for example, but not limited to, a flat fabric material or a three-dimensional fabric material, or only several fibers or threads. These fabric materials are made of one or more types of fibers with high tensile strength, such as natural fibers or chemical fibers. For example, the one or more types of fibers are selected from the following materials, including but not limited to: cotton fibers, linen fibers, silk fibers, nylon fibers, polyacrylonitrile fibers (PAN fibers), and ultra-high molecular weight polyethylene fibers (UHMWPEF).

It can be understood that there are many kinds of natural fibers or chemical fibers, and for the sake of brevity, they are not exhaustively listed here, but only some common examples are provided, and these examples do not constitute a limitation on the specific implementations of the present application. Specific implementations based on these fibers are all included within the scope of protection of the present application.

When the sheet shown in FIG. 3 is applied to an inflatable product, on the one hand, the first layer 712 made of the elastic polymer material 120 can provide good airtightness and can be conveniently welded to other sheets to form walls of an inflation chamber of the inflatable product. On the other hand, the firm bonding between the first layer and the second layer of the covering layer 710, and the firm bonding between the covering layer 710 and the fabric layer 720, allow the first layer 712 to be fixed to the fabric layer 720. Therefore, the fabric layer 720 with high tensile strength can prevent the walls of the inflation chamber from being stretched and deformed after being subjected to the internal pressure for a long period of time. Therefore, the inflatable product using the sheet shown in FIG. 3 can withstand the high internal air pressure and maintain the desired shape for a long time.

The specific structure and working principle of the manufacturing apparatus for a sheet for making an inflatable product provided by example embodiments are described in detail above.

Corresponding to the example embodiments described above, based on the above-described manufacturing apparatus, a manufacturing method for a sheet for making an inflatable product, according to an example embodiment, is provided below.

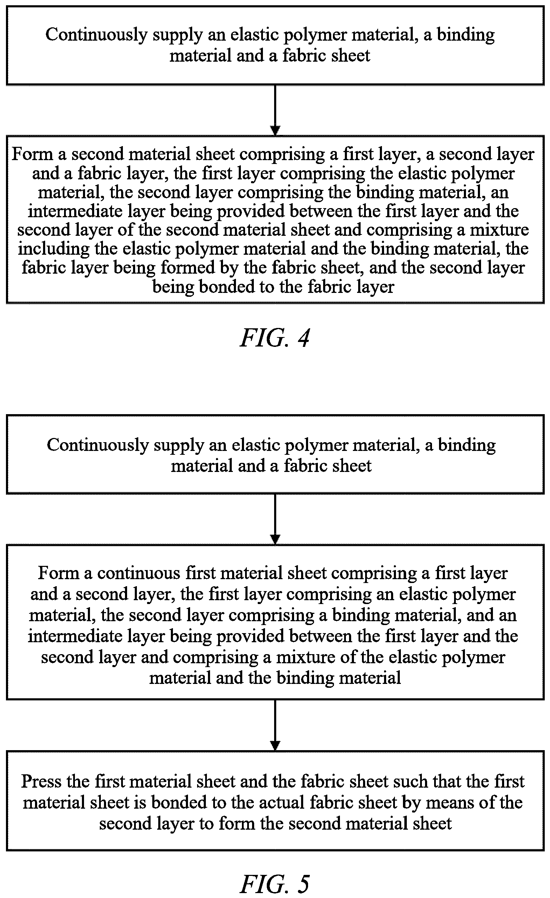

Referring to FIG. 4 and the example embodiments described above, a manufacturing method may comprises the following steps: continuously supplying an elastic polymer material, a binding material and a fabric sheet; and forming a second material sheet comprising a first layer, a second layer and a fabric layer, the first layer comprising the aforementioned elastic polymer material, the second layer comprising the aforementioned binding material, an intermediate layer being provided between the first layer and the second layer, the intermediate layer comprising a mixture that includes the aforementioned elastic polymer material and the aforementioned binding material, and the fabric layer being formed by the aforementioned fabric sheet, and the second layer being bonded to the fabric layer.

Referring to FIG. 5, in some example embodiments, prior to forming the second material sheet, a continuous first material sheet is formed, the first material sheet comprising a first layer and a second layer, the first layer comprising the aforementioned elastic polymer material, the second layer comprising the aforementioned binding material, an intermediate layer being provided between the first layer and the second layer, and the intermediate layer comprising a mixture of the aforementioned elastic polymer material and the aforementioned binding material; and then the first material sheet and the fabric sheet are pressed such that the first material sheet is bonded to the fabric sheet by means of the second layer of the first material sheet to form a second material sheet.

In some example embodiments, the aforementioned elastic polymer material is TPU.

According to the invention, the aforementioned binding material is a polyurethane reactive hot-melt adhesive.

In some example embodiments, the flowable elastic polymer material and the flowable binding material are joined via respective flow channels to form the aforementioned continuous first material sheet.

In some example embodiments, the first material sheet is further cooled. For example, the first material sheet is cooled by means of the pressing device for pressing the first material sheet and the fabric sheet.

It may be understood that the example embodiments described herein may be considered in a descriptive sense only and not for purposes of limitation. Descriptions of features or aspects within each example embodiment may be considered as available for other similar features or aspects in other example embodiments.

While exemplary embodiments have been described with reference to the figures, it will be understood by those of ordinary skill in the art that various changes in form and details may be made therein without departing from the scope as defined by the following claims.

## Claims

1. A method for manufacturing a sheet, the method comprising:
receiving a supply of an elastic polymer material (120) and a binding material (220) and a fabric sheet (410); and
forming a material sheet comprising:
a first layer (712) comprising the elastic polymer material (120),
a second layer (714) comprising the binding material (220),
an intermediate layer (716), between the first layer and the second layer, the intermediate layer comprising a mixture of the elastic polymer material and the binding material, and
a fabric layer (720) comprising the fabric sheet (410) bonded to the second layer (714), **characterised in that**
the elastic polymer material is PVC or TPU and the binding material is a polyurethane reactive hot-melt adhesive.

2. The manufacturing method according to claim 1, wherein the material sheet is a second material sheet (700), the method further comprising:
prior to forming the second material sheet (700): forming a first material sheet (600), the first material sheet (600) comprising the first layer (602), the second layer (604), and the intermediate layer (606);
wherein the forming the second material sheet (700) comprises pressing the first material sheet (600) and the fabric sheet (410) such that the first material sheet (600) is bonded to the fabric sheet (410) by means of the second layer (604) of the first material sheet (600) to form the second material sheet (700).

3. The manufacturing method according to claim 2, further comprising:
cooling the first material sheet (600) using a pressing device (500).

4. A sheet, comprising:
a covering layer (710) comprising:
a first layer (712) comprising an elastic polymer material (120),
a second layer (714) comprising a binding material (220), and
an intermediate layer (716) between the first layer (712) and the second layer (714), the intermediate layer (716) comprising a mixture of the elastic polymer material (120) and the binding material (220); and
a fabric layer (720) bonded to the binding material (220),
**characterised in that**
the elastic polymer material is PVC or TPU and the binding material is a polyurethane reactive hot-melt adhesive.

5. The sheet according to claim 4, wherein the sheet is made by pressing the covering layer (710) and the fabric layer (720).

## Patentansprüche

1. Verfahren zur Herstellung einer Folie, wobei das Verfahren Folgendes umfasst:
Empfangen einer Zuführung eines elastischen Polymermaterials (120) und eines Bindemittels (220) und
einer Gewebefolie (410), und
Formen einer Materialfolie, umfassend:
eine erste Schicht (712), umfassend das elastische Polymermaterial (120),
eine zweite Schicht (714), umfassend das Bindemittel (220),
eine Zwischenschicht (716) zwischen der ersten Schicht und der zweiten Schicht, wobei die Zwischenschicht eine Mischung aus dem elastischen Polymermaterial und dem Bindemittel umfasst, und
eine Gewebeschicht (720), umfassend die Gewebefolie (410), die mit der zweiten Schicht (714) gebunden ist, **dadurch gekennzeichnet, dass** das elastische Polymermaterial PVC oder TPU ist und dass das Bindemittel ein polyurethan-reaktiver Heißschmelzkleber ist.

2. Herstellungsverfahren nach Anspruch 1, wobei die Materialfolie eine zweite Materialfolie (700) ist und das Verfahren zudem Folgendes umfasst:
vor dem Formen der zweiten Materialfolie (700): Formen einer ersten Materialfolie (600), wobei die erste Materialfolie (600) die erste Schicht (602), die zweite Schicht (604) und die Zwischenschicht (606) umfasst,
wobei das Formen der zweiten Materialfolie (700) das Pressen der ersten Materialfolie (600) und der Gewebefolie (410) umfasst, sodass die erste Materialfolie (600) mit der Gewebefolie (410) mittels der zweiten Schicht (604) der ersten Materialfolie (600) gebunden wird, um die zweite Materialfolie (700) zu formen.

3. Herstellungsverfahren nach Anspruch 2, zudem umfassend:
Kühlen der ersten Materialfolie (600) unter Nutzung einer Pressvorrichtung (500).

4. Folie, umfassend:
eine Deckschicht (710), umfassend:
eine erste Schicht (712), umfassend ein elastisches Polymermaterial (120),
eine zweite Schicht (714), umfassend ein Bindemittel (220), und
eine Zwischenschicht (716) zwischen der ersten Schicht (712) und der zweiten Schicht (714), wobei die Zwischenschicht (716) eine Mischung aus dem elastischen Polymermaterial (120) und dem Bindemittel (220) umfasst,
und
eine Gewebeschicht (720), die mit dem Bindemittel (220) gebunden ist,
**dadurch gekennzeichnet, dass** das elastische Polymermaterial PVC oder TPU ist und dass das Bindemittel ein polyurethan-reaktiver Heißschmelzkleber ist.

5. Folie nach Anspruch 4, wobei die Folie hergestellt wird, indem die Deckschicht (710) und die Gewebeschicht (720) gepresst werden.

## Revendications

1. Procédé de fabrication d'une feuille, le procédé comprenant :
recevoir une fourniture d'un matériau polymère élastique (120) et d'un matériau de liaison (220) et d'une feuille de tissu (410) ; et
former une feuille de matériau comprenant :
une première couche (712) comprenant le matériau polymère élastique (120),
une deuxième couche (714) comprenant le matériau de liaison (220),
une couche intermédiaire (716), entre la première couche et la deuxième couche, la couche intermédiaire comprenant un mélange du matériau polymère élastique et du matériau de liaison, et
une couche de tissu (720) comprenant la feuille de tissu (410) liée à la deuxième couche (714),
**caractérisé en ce que** le matériau polymère élastique est du PVC ou du TPU et le matériau de liaison est un adhésif thermofusible réactif au polyuréthane.

2. Procédé de fabrication selon la revendication 1, dans lequel la feuille de matériau est une seconde feuille de matériau (700), le procédé comprenant en outre :
avant de former la deuxième feuille de matériau (700) :
former une première feuille de matériau (600), la première feuille de matériau (600) comprenant la première couche (602), la deuxième couche (604) et la couche intermédiaire (606) ;
dans lequel la formation de la seconde feuille de matériau (700) comprend le pressage de la première feuille de matériau (600) et de la feuille de tissu (410) de telle sorte que la première feuille de matériau (600) est liée à la feuille de tissu (410) au moyen de la seconde couche (604) de la première feuille de matériau (600) pour former la seconde feuille de matériau (700).

3. Procédé de fabrication selon la revendication 2, comprenant en outre :
refroidir la première feuille de matériau (600) en utilisant un dispositif de pressage (500).

4. Feuille, comprenant :
une couche de couverture (710) comprenant :
une première couche (712) comprenant un matériau polymère élastique (120),
une deuxième couche (714) comprenant un matériau de liaison (220), et
une couche intermédiaire (716) entre la première couche (712) et la deuxième couche (714), la couche intermédiaire (716) comprenant un mélange du matériau polymère élastique (120) et du matériau de liaison (220) ; et
une couche de tissu (720) liée au matériau de liaison (220),
**caractérisé en ce que** le matériau polymère élastique est du PVC ou du TPU et le matériau de liaison est un adhésif thermofusible réactif au polyuréthane.

5. Feuille selon la revendication 4, dans laquelle la feuille est faite en pressant la couche de couverture (710) et la couche de tissu (720).
